(19) Europäisches Patentamt / European Patent Office / Office européen des brevets

(11) **EP 3 075 587 A1**

(12) **EUROPEAN PATENT APPLICATION**

(43) Date of publication:
05.10.2016 Bulletin 2016/40

(21) Application number: **15161976.4**

(22) Date of filing: **31.03.2015**

(51) Int Cl.:
**B60K 6/48** (2007.10)    **B60K 7/00** (2006.01)
**B60K 17/02** (2006.01)    **B60K 6/26** (2007.10)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Vetter, Marc**
**8038 Zürich (CH)**

(72) Inventor: **Vetter, Marc**
**8038 Zürich (CH)**

(74) Representative: **Frischknecht, Harry Ralph**
**Isler & Pedrazzini AG**
**Postfach 1772**
**8027 Zürich (CH)**

(54) **DRIVE ARRANGEMENT**

(57)    Drive arrangement (1) for a motor vehicle comprising an internal combustion engine (2) with at least one output shaft (3) providing a rotary motion (M), at least one wheel, in particular at least two wheels (4, 5), which is/are driven by said internal combustion engine (2), wherein said wheel or each of said wheels (4, 5) comprises a drive shaft (6, 7) to which said rotary motion (M) is provided in order to drive the respective wheel (4, 5). The drive arrangement (1) comprises further at least one electromechanical machine (8, 9) which is arranged between said output shaft (3) and at least one of said drive shafts (6, 7), such that with the electromechanical machine (8, 9) the respective drive shaft (6, 7) is engageable and dis-engageable to said output shaft (3), wherein the rotary motion (M) provided by the output shaft (3) is directly or indirectly inputted in said electromechanical machine (8, 9) and is directly or indirectly outputted by said electromechanical machine (8, 9) to said drive shaft (6, 7) when the electromechanical machine engages the output shaft (3) and the drive shaft (6, 7).

FIG. 1

EP 3 075 587 A1

**Description**

TECHNICAL FIELD

The present invention relates to a drive arrangement for a motor vehicle according to the preamble of claim 1.

PRIOR ART

Drive arrangements for motor vehicles are well known from prior art.

In internal combustion engine driven motor vehicles or hybrid drives an internal combustion engines is known to drive an axle of the motor vehicle by means of a customary differential. These differentials are built to limit the torque ratio between their output elements to a fixed ratio as determined by their design. However, it appears to be difficult to adapt and control this torque ratio while driving.

What is commonly known as a clutch-type limited slip differential sets the torque ratio to a ratio as mechanically designed by layout of the differential clutch. When it is to accommodate an arbitrary torque ratio however the design is problematic.

What is commonly known as a viscous coupling differential sets the torque ratio depending on the viscous effects of the differential fluid and the difference in angular velocity of the output elements. When it is to accommodate an arbitrary torque ratio however the design is problematic. A torque ratio cannot be applied, when the angular velocity of the outputs is equal.

No designs have been brought forward to address an adaptation of the torque ratio and/or angular velocity ratio while operating.

SUMMARY OF THE INVENTION

Starting from this prior art, it is an object of the present invention to provide an improved drive arrangement. In particular it is an object of the present invention to provide an improved drive arrangement which makes an adaptation of the torque ratio while operating possible, allows independent torque distribution and negative torque ratios, in a constructively favorable way. The latter in particular with higher operating and/or constructive degrees of freedom.

This object is solved by drive arrangement according to claim 1. Accordingly the drive arrangement for a motor vehicle comprises an internal combustion engine with at least one output shaft providing a rotary motion, at least one wheel, in particular at least two wheels, which is/are driven by said internal combustion engine, wherein said wheel or each of said wheels comprises a drive shaft to which said rotary motion is provided in order to drive the respective wheel.

The drive arrangement comprises further at least one electromechanical machine which is arranged between said output shaft and at least one of said drive shafts, such that with the electromechanical machine the respective drive shaft is engageable and dis-engageable to said output shaft, wherein the rotary motion provided by the output shaft is directly or indirectly inputted in said electromechanical machine and is outputted by said electromechanical machine to said drive shaft directly or indirectly when the electromechanical machine engages the output shaft and the drive shaft.

The arrangement of the electromechanical machine between the internal combustion engine and the drive shaft has the advantage that the wheel can be engaged and disengaged very easily. Furthermore torque distribution from the output shaft to the wheel becomes controllable, due to the possibilities of controlling the electromechanical machine. The same applies to the ratio of the angular velocity between the input and the output of the electromechanical machine. Due to this possibility the driving behavior of a vehicle that is equipped with such a drive arrangement can be enhanced. In particular the driving behavior in the acceleration and deceleration phase, during cornering of the vehicle as well as driving in environments with reduced and/or irregular traction can be positively influenced.

The term dis-engaged is to be understood that there is no transmission in terms of torque and/or power and/or angular velocity between the drive shaft and the output shaft. Hence the drive shaft is separated from the output shaft.

The term engaged is to be understood that there is a transmission in terms of torque and/or power and/or angular velocity between the drive shaft and the output shaft. The degree of transmission can vary depending on the state of the electromechanical machine. The degree can be controlled actively.

The term directly inputted is to be understood that there is a direct mechanical contact between the output shaft and the electromechanical machine and/or between the electromechanical machine and the drive shaft.

The term indirectly inputted is to be understood that there is an indirect mechanical contact between the output shaft and the electromechanical machine and/or between the electromechanical machine and the drive shaft, typically via a mechanical gear or a mechanical clutch.

Preferably the electromechanical machines are arranged such that they act as a differential gear between at least two wheels. Therefore state of the art mechanical differential gears can be replaced by means of this invention, in particular by means of the electromechanical machine as mentioned herein. As the magnetic field in the electromechanical machine is controllable and thereby the torque exerted by the electromechanical machine is controllable and thereby the torque transmitted between the output shaft and the drive shaft is controllable, the function of a differential gear can be enhanced and augmented.

In other words: The control of such an electromechanical machine and such an arrangement, can emulate the behavior of a mechanical differential gear in addition to augmented functionality in particular during driving behavior as experienced in the acceleration and deceleration phase, during cornering of the vehicle as well as driving in environments with reduced and/or irregular traction.

In general when referring to the control aspect and/or control of certain variables such as torque and/or angular velocity and/or power in the present invention preferably different combinations of control variables and control strategies are encompassed. Preferably the control unit of the respective electromechanical machine controls the respective electromechanical machine and as such the torque and/or angular velocity and/or power of the electromechanical machine as determined by an overall controller of the invention system, such as a vehicle, which controls the interaction of the components. The overall controller can be a control element of a vehicle.

In particular the torque applied between the output shaft and the drive shaft and the ratio and/or difference in angular velocity between said output shaft and said drive shaft can be controlled by the control unit of the electromechanical machine.

In another advantageous embodiment of the invention the torque applied between the output shaft and the drive shaft and the electric power supplied by the electromechanical machine or the electric power supplied to the electromechanical machine can be controlled by the control unit of the electromechanical machine.

In another advantageous embodiment of the invention the ratio and/or difference in angular velocity between the output shaft and the drive shaft and the electric power supplied by the electromechanical machine or the electric power supplied to the electromechanical machine can be controlled by the control unit of the electromechanical machine.

In an advantageous embodiment of the present invention the torque applied between the output shaft and the drive shaft can be directly or indirectly controlled by the control unit.

In another advantageous embodiment of the present invention the ratio between and/or difference between and/or the absolute angular velocity of the output shaft and the drive shaft can be directly or indirectly controlled by the control unit.

In another advantageous embodiment of the present invention the electric power supplied by the electromechanical machine and/or the electric power supplied to the electromechanical machine can be directly or indirectly controlled by the control unit.

In another advantageous embodiment of the present invention the power supplied to the respective wheel can be directly or indirectly controlled by the control unit.

In accordance with common control strategies and in particular control strategies which control the angular velocity and/or angular velocity ratio and/or torque and/or torque ratio and/or power transmitted to the respective wheel and/or the respective electromechanical machine and/or other component of the invention can be used to control the behavior of the present invention, but serve as examples and are not limited to these.

Preferably the electromechanical machine comprises a stator and a rotor. The stator is mounted in a mechanical connection with the output shaft and the rotor is mounted in a mechanical connection with the drive shaft. Alternatively the stator is mounted in a mechanical connection with the drive shaft and the rotor is mounted in a mechanical connection with the output shaft.

The rotational axis of the rotor is thereby collinear with the rotational axis of the stator. The rotor and the stator rotate around their rotational axis. Depending on the magnetic field between rotor and stator the angular velocity can be equal between rotor and stator or the angular velocity can be unequal between rotor and stator.

Accordingly rotor and stator are mounted such that both of them can rotate. The terms rotor and stator are used in accordance with common terminology of electromechanical machines. Strictly speaking however both components can rotate and could be referred to as rotors in the present invention.

It is advantageous that all rotating components of the electromechanical machine, in particular the rotor and the stator be statically and/or dynamically balanced around the axis of rotation.

The electromechanical machine is preferably chosen from the group of synchronous motor with permanent magnets or DC-motor with permanent magnets, or standard DC-motor; or induction motor; or vernier motor with permanent magnets or vernier motor. However, the motor can be of any other type.

Preferably the drive arrangement further comprises a control unit and an electrical power source, wherein with said control unit and said electrical power source, the angular velocity and/or the torque exerted between the input provided by said output shaft and the output provided by the electromechanical machine on said drive shafts is adjustable. The electrical power source is a device that is configured to receive, store and provide electrical energy. The electrical power source can be for example a battery.

The control unit is preferably configured to receive signals or data from a motor control element which is part of the vehicle and/or the internal combustion engine. Furthermore the control unit is configured to provide control signals based on said signals or data received from the motor control unit or at least one electromechanical machine.

Should the vehicle that is equipped with a drive arrangement as mentioned above make a turning manoeuvre, the latter will be recognized by the control element of the vehicle which then provides control signals for the control unit directly or indirectly controlling said electromechanical machine, for example through the control unit of the electromechanical machine. Based on these control signals it becomes for example possible to control the angular velocity of each of the wheels.

Furthermore it is possible to control the angular velocity and/or the torque and/or the power transmitted by said electromechanical machine from the internal combustion engine to the wheel during acceleration, deceleration and normal constant velocity.

Preferably a first of said electromechanical machines is arranged in connection with a first of said drive shafts and a second of said electromechanical machines is arranged in connection with a second of said drive shafts. Hence in a two-by-four arrangement the front wheels or the rear wheels will be provided with an electromechanical machine per wheel. In a four-wheel drive all four wheels will be provided with an electromechanical machine.

Preferably the output shaft of the internal combustion engine is in rotary connection with a gear which gear acts on said electromechanical machines. The gear mainly serves to transmit the rotary speed from the output shaft to the electromechanical machine. In particular when the angular arrangement between the output shaft and the electromechanical machine is such that deflection is necessary, for example when the output shaft extends perpendicular to the rotational axis of the electromechanical machine.

In a first preferred embodiment the output shaft of the internal combustion engine is in rotary connection with a gear, in particular a bevel gear, said gear having a first output shaft and a second output shaft. Between the first output shaft of the gear and the drive shaft of a first wheel one of said electromechanical machines is arranged and the second output shaft of the gear is directly linked to the drive shaft of the second wheel.

In this first preferred embodiment the electromechanical machine acts as a differential gear, as the transmission ratio in terms of angular velocity and/or torque between the first output shaft of the gear and the second output shaft of the gear can be controlled and adjusted by means of said electromechanical machine.

Depending on the alignment of the output shaft of the motor and/or the drive shaft or the electromechanical machine other gears are also possible.

In a second preferred embodiment the output shaft of the internal combustion engine is in rotary connection with a gear, in particular a bevel gear, said gear having a first output shaft and a second output shaft. Between the first output shaft of the gear and the drive shaft of a first wheel one of said electromechanical machines is arranged and between the second output shaft of the gear and the drive shaft of a second wheel a further of said electromechanical machines is arranged.

In this second preferred embodiment the electromechanical machine acts as a differential gear, as the transmission ratio in terms of angular velocity and/or torque between the first output shaft of the gear and the second output shaft of the gear can be controlled and adjusted by means of said electromechanical machines. The arrangement of two electromechanical machines is advantageous as each of them can be controlled independently.

Due to this possibility the driving the behavior of a vehicle that is equipped with such a drive arrangement can be enhanced. In particular the driving behavior in the acceleration and deceleration phase, during cornering of the vehicle as well as driving in environments with reduced and/or irregular traction can be positively influenced.

Depending on the alignment of the output shaft of the motor and the drive shaft or the electromechanical machine other gears are also possible.

In a third embodiment the internal combustion engine comprises a first output shaft and a second output shaft. Preferably the first output shaft and the second output shaft extend with their ends in opposite directions. Said first output shaft is in rotary connection with the first electromechanical machine and said second output shaft is in rotary connection with the second electromechanical machine. Hence each of the output shafts of the internal combustion engine comprises one of said electromechanical machines and is therefore controllable as mentioned above. Such a configuration again has the advantage that a conventional differential gear becomes obsolete, as well as the gear, in particular the bevel gear, is no longer necessary. Preferably said first and second output shaft of the internal combustion engine are two opposite ends of the same shaft.

In a fourth embodiment the drive arrangement comprises additionally two further wheels wherein each of said wheels comprises a shaft. Hence the drive arrangement comprises said two wheels as mentioned above with regard to the first, second and third embodiment plus two further wheels. In particular four wheels are present.

In a first variant of the fourth embodiment said two further wheels are driven by an electromechanical machine. Thereby the shaft of the respective wheel is in connection with the output shaft of an electromechanical machine.

In a second variant of the fourth embodiment said two further wheels are driven by an electromotor which has an output shaft acting on a differential gear to which said two wheels are connected via said shaft. The differential gear can be a differential gear as mentioned above or a mechanical differential gear.

In a third variant of the fourth embodiment said two further wheels are non-driven. Thereby the shaft of the respective wheel is a non-driven shaft.

In all embodiments as mentioned above it is particularly advantageous that with said electromechanical machine it becomes possible to recuperate electrical energy in case the electromechanical machine acts as generator. In particular the generated electrical energy is recuperated in said electrical power source. In case a plurality of electromechanical machines are arranged and at least one of said electromechanical machines acts as a generator the generated electrical energy is recuperated to the other electromechanical machine and/or the electrical power source.

In all embodiments, in particular in the first embodiment as well as in the second embodiment, a transmission gear and/or a clutch is arranged between the internal combustion engine and the wheel or if present the gear and/or between the electromechanical machine and the wheel.

The transmission gear can have a gear ratio such that the angular velocity its output is increased or decreased with regard to the angular velocity of its input.

Preferably said clutch is an automatic clutch or manual clutch.

In the following several preferred aspects will be shown by means of a mathematical derivation under the assumption that there are no energy losses due to less than perfect efficiency. The energy equilibrium of the invention is represented by Equation (I). Where $P_{output\ shaft}$ stands for the power exchanged with the output shaft of the internal combustion engine, $P_{electric}$ stands for the power exchanged with the electric power source and $P_{transmitted}$ stands for the power exchanged with the drive shaft.

From Equation (II) it becomes evident that $P_{output\ shaft}$ is the product of $\omega_{output\ shaft}$ (the angular velocity of the output shaft) and $T_{output\ shaft}$ (the torque of the output shaft). Equation (III) shows that the power exchanged with the electric power source is the sum of the power generated and/or consumed by the electromechanical machines.

Equations (VI-VIII) follow when steady state (torque equilibrium, see Equation (V)) is assumed and the number of electromechanical machines and driveshafts is set to two (n = 2).

Equation (IX) is derived by plugging these results into Equation (I).

I.

$$P_{output\ shaft} = P_{electric} + P_{transmitted}$$

II.

$$P_{output\ shaft} = \omega_{output\ shaft} \cdot T_{output\ shaft}$$

III.

$$P_{electric} = P_{electric\ machine\ 1} + P_{electric\ machine\ 2} = \sum_{i=1}^{n} P_{electric\ machine\ i}$$

IV.

$$P_{transmitted} = P_{transmitted\ 1} + P_{transmitted\ 2} = \sum_{i=1}^{n} P_{transmitted\ i}$$

V.

$$T_{output\ shaft} = T_{wheel\ 1} + T_{wheel\ 2} = \sum_{i=1}^{n} T_{wheel\ i}$$

VI.

$$P_{output\ shaft} = \omega_{output\ shaft} \cdot \left(T_{wheel\ 1} + T_{wheel\ 2}\right)$$

VII.

$$P_{electric\ machine\ i} = T_{wheel\ i} \cdot \left(\omega_{output\ shaft} - \omega_{wheel\ i}\right)$$

VIII.

$$P_{transmitted\ i} = T_{wheel\ i} \cdot \omega_{wheel\ i}$$

IX.

$$\omega_{output\ shaft} \cdot \left(T_{wheel\ 1} + T_{wheel\ 2}\right) = T_{wheel\ 1} \cdot \left(\omega_{output\ shaft} - \omega_{wheel\ 1}\right) +$$
$$T_{wheel\ 2} \cdot \left(\omega_{output\ shaft} - \omega_{wheel\ 2}\right) + T_{wheel\ 1} \cdot \omega_{wheel\ 1} + T_{wheel\ 2} \cdot \omega_{wheel\ 2}$$

Further embodiments of the invention are laid down in the dependent claims.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

Fig. 1    shows a schematic view of a drive arrangement according to a first embodiment;
Fig. 2    shows a schematic view of a drive arrangement according to a second embodiment;
Fig. 3    shows a schematic view of a drive arrangement according to a variant of the embodiments;
Fig. 4    shows a schematic view of a drive arrangement according to a third embodiment;
Fig. 5    shows a schematic view of a drive arrangement according to a first variant of a fourth embodiment;
Fig. 6    shows a schematic view of a drive arrangement according to a second variant of the fourth embodiment; and
Fig. 7    shows a schematic view of a drive arrangement according to a third variant of the fourth embodiment.

DESCRIPTION OF PREFERRED EMBODIMENTS

The present invention refers to a drive arrangement 1 for a motor vehicle. With reference to the figures several embodiments will be explained in more detail below.
In principal the drive arrangement 1 comprises an internal combustion engine 2 with at least one output shaft 3 providing a rotary motion M. Furthermore the drive arrangement 1 comprises at least one wheel, in particular at least two wheels 4, 5, which is/are driven by said internal combustion engine 2. Each of said wheels 4, 5 comprises a drive shaft 6, 7 to which said rotary motion M is provided in order to drive the respective wheel 4, 5.
The drive arrangement 1 comprises further at least one electromechanical machine 8, 9 which is arranged between the output shaft 3 of the internal combustion engine 2 and at least one of said drive shafts 6, 7. With the electromechanical machine 8, 9 the respective drive shaft 6, 7 is engageable or dis-engageable to said output shaft 3. In the disengaged state no rotary motion M is transmitted from the output shaft 3 to the drive shafts 6, 7. In the engaged state the rotary motion M provided by the output shaft 3 is transmitted to the drive shaft 6, 7. In other words the rotary motion M provided by the output shaft 3 is directly or indirectly inputted in said electromechanical machine 8, 9 and is outputted by said electromechanical machine 8, 9 to said drive shaft 6, 7 directly or indirectly when the electromechanical machine engages the output shaft 3 and the drive shaft 6, 7.
The electromechanical machine 8, 9 has the function of a clutch between the output shaft 3 of the internal combustion engine 2 and the drive shaft 6, 7. However, with the electromechanical machine 8, 9 it is not only possible to engage or dis-engage the output shaft 3 with the drive shaft 6, 7 but to control the degree of transmission in terms of torque and/or angular velocity and/or power. This means that with the electromechanical machine 8, 9 it becomes possible to control the transmission between the output shaft 3 and the drive shaft 6, 7.

In particular the electromechanical machine 8, 9 comprises a stator 11 and a rotor 12. In a first variant the stator 11 is mounted in a mechanical connection with the output shaft 3 and the rotor 12 is mounted in a mechanical connection with the drive shaft 6, 7. In a second variant the stator 11 is mounted in a mechanical connection with the drive shaft 6, 7 and the rotor 12 is mounted in a mechanical connection with the output shaft 3. The rotor 12 rotates around a rotational axis A of the electromechanical machine 8, 9. The same applies to the stator 11 which is also oriented such that it rotates around the rotational axis B. The rotational axes A and B are collinear with each other. The stator 11 as well as the rotor 12 are mounted such that both elements can rotate around the rotational axis A or B. Between the stator 11 and the rotor 12 a magnetic field can be provided such that the rotary motion M can be transmitted between the stator 11 and the rotor 12 or vice versa.

The drive arrangement 1 further comprises a control unit, a control unit for the respective electromechanical machines and an electrical power source. All three of which are not shown in the figures.

The control unit serves to control the speed ratio and/or the torque ratio between the input provided by said output shaft 3 and the output provided by the electromechanical machine 8, 9 to said drive shaft 6, 7. The control unit is further preferably configured to receive control signals from sensor and/or the motor control element with which the internal combustion engine 2 is controlled.

With the electrical power source electrical power can be provided to the electromechanical machine 8, 9 in order to fulfil its function. The electrical power source can be a battery or any other suitable means.

Between the output shaft 3 and the electromechanical machine 8, 9 it may be necessary to arrange a gear 10. This in particular in case the output shaft 3 rotates around an axis which is not in alinement with the axis of the electromechanical machine 8, 9.

Between the electromechanical machine 8, 9 and the drive shaft 6, 7 it may be necessary and/or advantageous to arrange a gear 28.

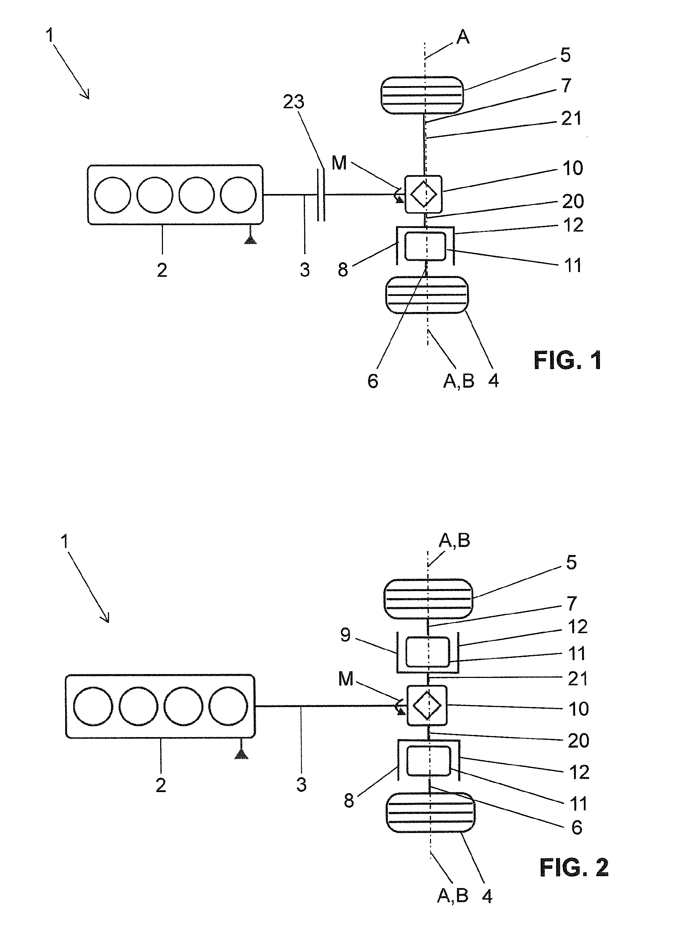

Figure 1 shows a first embodiment of the drive arrangement 1 according to the description above. The output shaft 3 of the internal combustion engine 2 is in rotary connection with a gear 10. The gear 10 is in the present case a bevel gear. The bevel gear 10 has a first output shaft 20 and a second output shaft 21. Between the first output shaft 20 of the gear 10 and the drive shaft 6 of the first wheel 4 one of said electromechanical machines 8 is arranged. The second output shaft 21 of the gear 10 is directly linked to the drive shaft 7 of the second wheel 5.

With the electromechanical machine 8 as arranged in the first embodiment the electromechanical machine 8 serves as a differential gear. The relative angular velocity between the first wheel 4 and the second wheel 5 can therefore be adjusted according to the driving behaviour of the drive arrangement 1.

Preferably the control unit is configured to receive or to determine the speed ratio between the first wheel 4 and the second wheel 5 in case of a turning manoeuvre of the vehicle.

The gear 10 is here provided as bevel gear. However the type of gear depends on the orientation of the output shaft 3 and the orientation of the drive shafts 6, 7. Alternative gears can also be used.

In addition there is arranged an optional clutch 23 between the output shaft 3 and the gear 10. With the clutch 23 the output shaft 3 can be interrupted.

Figure 2 shows a second embodiment of the drive arrangement 1. The output shaft 3 of the internal combustion engine 2 is in a rotary connection with a gear 10. The gear 10 is preferably a bevel gear, but can be any other gear as mentioned above with regard to figure 1.

The gear 10 has a first output shaft 20 and a second output shaft 21. Between the first output shaft 20 of the gear 10 and the drive shaft 6 of the first wheel 4 one of said electromechanical machines 8 is arranged. Furthermore between the second output shaft 21 of the gear 10 and the drive shaft 7 of the second wheel 5 a further of said electromechanical machines 9 is arranged. The second embodiment is therefore similar to the embodiment as shown in figure 1 apart from the additional second electromechanical machine 9. The electromechanical machine 8, 9 act as differential gear.

This embodiment has the advantage that with the electromechanical machines 8, 9 the angular velocity of the wheels 4, 5 as well as the torque between the output shaft 20, 21 and the drive shafts 6, 7 can be controlled and adjusted if necessary.

A further advantage of the second embodiment is that during acceleration and deceleration the angular velocity ratio and/or the torque ratio between the output shaft 3 and drive shafts 6, 7 can be controlled. Due to this possibility the driving the behavior of a vehicle that is equipped with such a drive arrangement can be enhanced. In particular the driving behavior in the acceleration and deceleration phase, during cornering of the vehicle as well as driving in environments with reduced and/or irregular traction can be positively influenced.

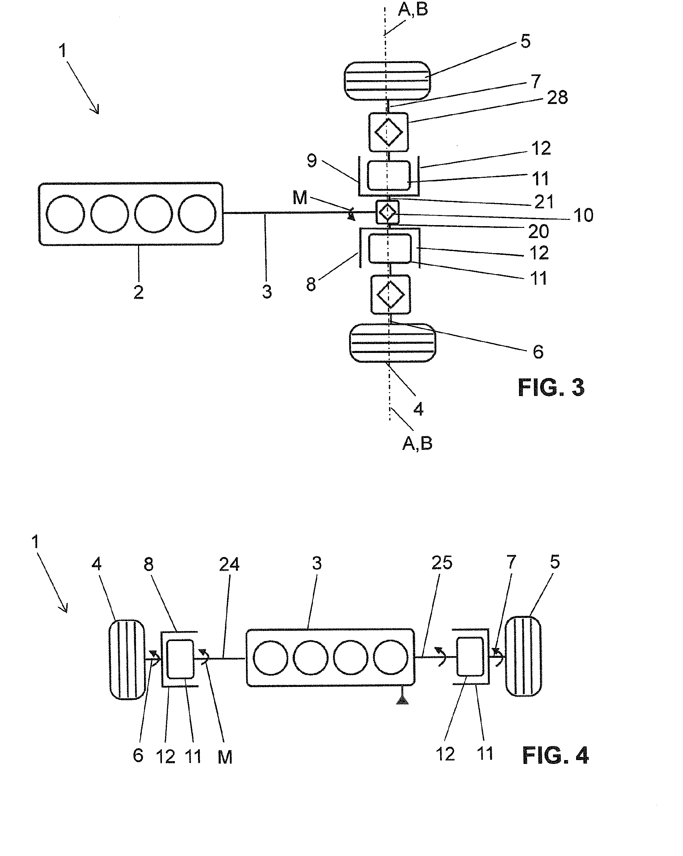

Figure 3 shows a similar configuration as figures 1 and 2. In addition there is arranged a clutch 23 between the output shaft 3 and the gear 10. With the clutch 23 the output shaft 3 can be interrupted.

Furthermore an optional gear 28 can be arranged between the electromechanical machine 8,9 and the wheel 5, 6 as it is shown in figure 3.

Figure 4 shows a third embodiment of the drive arrangement 1 as outlined generally above. In this third embodiment the internal combustion engine 2 comprises a first output shaft 24 and a second output shaft 25. The first output shaft 24 is in rotary connection with the first electromechanical machine 8 which is then linked via the drive shaft 6 to the first wheel 4. The second output shaft 25 is in rotary connection with the second electromechanical machine 9 which is then in rotary connection with the second wheel 5 via the drive shaft 7. With the electromechanical machines 8, 9 it is possible to control the first wheel 4 and the second wheel 5.

This embodiment has the advantage that with the electromechanical machines 8, 9 the angular velocity of the wheels 4, 5 as well as the torque between the output shaft 24, 25 and the drive shafts 6, 7 can be controlled and adjusted if necessary.

A further advantage of the third embodiment is that during acceleration and deceleration the angular velocity ratio and/or the torque ratio between the output shafts 24, 25 and drive shafts 6, 7 can be controlled.

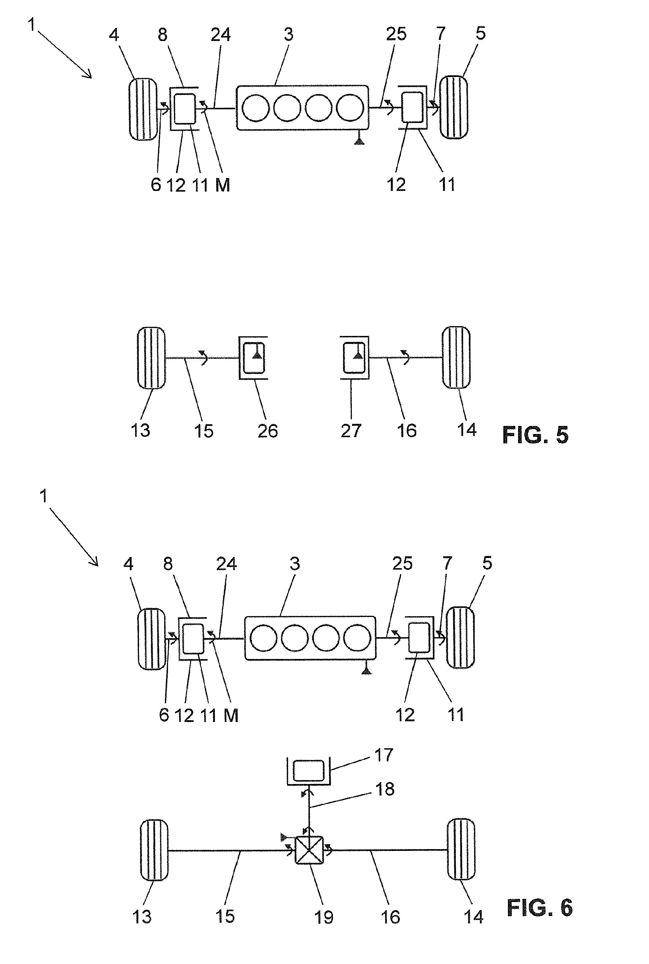

Figures 5 to 7 show a fourth embodiment of the drive arrangement in different variants. In this fourth embodiment the drive arrangement 1 comprises two further wheels 13, 14 wherein each of said wheels comprises a shaft 15, 16. The further wheels are designated as third wheel 13, fourth wheel 14 and the shafts are designated as third shaft 15 and fourth shaft 16. In this fourth embodiment according to figures 5 to 7 the third embodiment according to figure 4 is shown in connection with the internal combustion engine 2. However, it is clear that also the first or the second embodiment according to figures 1 and 2 or 3 can replace the parts which are linked with the internal combustion engine 2.

In this first variant of the fourth embodiment as shown in figure 5 each of said shafts 15, 16 is a drive shaft. Each of the shafts 15, 16 are in connection with an electromechanical machine 26, 27. Hence there is one electromechanical machine 26 arranged in connection with the first shaft 15 and there is an addition electromechanical machine 27 arranged in connection with the second shaft 16. With this electromechanical machines 26, 27 the shafts 15, 16 can be provided with a rotary motion such that the wheels 13, 14 can be driven. Said electromechanical machines 26, 27 can be conventional motors.

Figure 6 shows a second variant of the fourth embodiment. The two further wheels 13, 14 are driven by an electromotor 17 which has an output shaft 18. The output shaft 18 acts on a differential gear 19 to which said wheels 13, 14 are connected via the drive shaft 15, 16 of said wheels 13, 14. A rotary motion M is transmitted from the output shaft 18 via differential gear 19 to the shafts 15, 16. The electromotor 17 can also be an electromechanical machine.

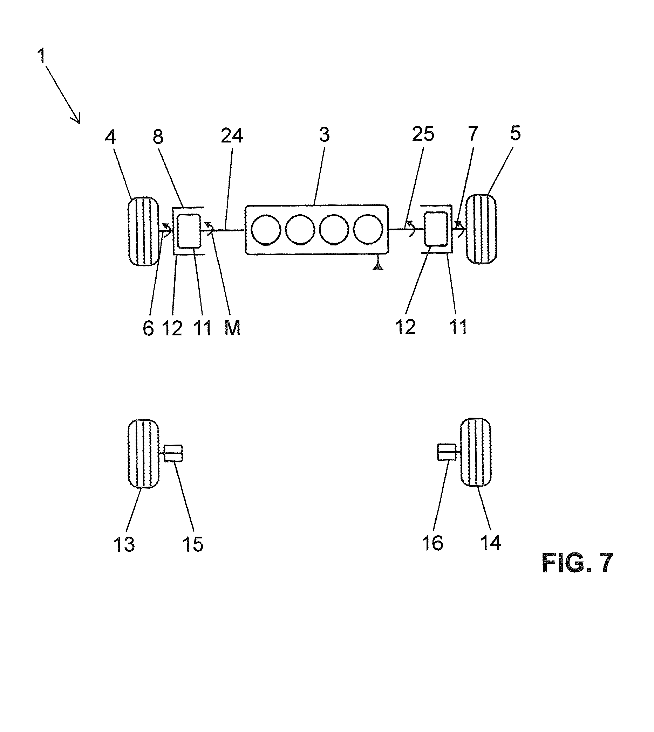

Figure 7 shows a further variant of this fourth embodiment. Here the shafts 15, 16 of the wheels 13, 14 are non-driven shafts. Hence they will not be provided with an active rotary motion but will rotate passive when the vehicle is in motion.

In case at least one of the electromechanical machines as described above acts as a generator the generated electrical energy is recuperated in said electrical power source. It may also be possible that in case a plurality of electromechanical machines are arranged and at least one of said electromechanical machines acts as a generator the generated electrical energy is recuperated to one or more of the other electromechanical machines.

In summary the present invention, in particular according to at least one of the embodiments as mentioned above, has the following advantages in different driving situations:

During acceleration from standstill of a vehicle with a drive arrangement according to the present invention, the drive arrangement can generate electric power while accelerating and store it in an electric power source and/or use it to power 17 and/or 26 and/or 27. In particular the torque transmitted to the wheel can be adapted dynamically depending on the current road and driving condition. Another advantage is that the transmitted torque can be controlled to be the maximum transmittable torque before tire slip occurs as determined by the current road and driving condition. This allows faster acceleration.

During deceleration phase of a vehicle with a drive arrangement according to the present invention, the drive arrangement can generate electric power while decelerating the vehicle and store it in an electric power source. In particular electric power can be generated when the angular velocity of the rotor of the electromechanical machine which is in connection with the output shaft of the internal combustion engine is lower than the angular velocity of the stator of said electromechanical machine which is in connection with the drive shaft of the respective wheel.

During cornering of a vehicle with a drive arrangement according to the present invention, in particular when it is advantageous that the wheel closer to the inside of the turn has an angular velocity which is lower than the angular velocity of the wheel further away from the inside of the turn, driving experience can be positively influenced by the current invention. In particular individual angular velocity and/or ratio of the angular velocity between the wheels can be controlled such that a smaller turning radius is possible and/or cornering with a smaller steering angle, as commonly defined, is possible.

During driving in environments with reduced and/or irregular traction of vehicle with a drive arrangement according to the present invention the driving experience can be positively influenced. In particular the torque transmitted to the wheels by the present invention can be controlled to allow for the maximum transmittable torque before tire slip occurs as determined by the current road and driving condition. In particular the torque transmitted to the individual wheel can be controlled and even highly irregular and/or quickly changing driving conditions and/or tire slip limitations can be taken into account and reacted on by the present invention.

With regard to all figures it has to be noted that the direction of rotation is shown with an arrow. Thereby the arrow indicates that preferably all wheels rotate in the same direction of rotation. However, it is clear that the direction of rotation of the wheels of a drive arrangement can be different amongst the wheels.

LIST OF REFERENCE SIGNS

| | | | | |
|---|---|---|---|---|
| 1 | drive arrangement | | 19 | differential gear |
| 2 | internal combustion engine | | 20 | first output shaft |
| 3 | output shaft | | 21 | second output shaft |
| 4 | first wheel | | 23 | clutch |
| 5 | second wheel | | 24 | first output shaft |
| 6 | first drive shaft | | 25 | second output shaft |
| 7 | second drive shaft | | 26 | third electromechanical machine |
| 8 | first electromechanical machine | | | |
| 9 | second electromechanical machine | | 27 | fourth electromechanical machine |
| 10 | gear | | 28 | optional gear |
| 11 | stator | | | |
| 12 | rotor | | | |
| 13 | third wheel | | | |
| 14 | fourth wheel | | | |
| 15 | third shaft | | | |
| 16 | fourth shaft | | | |
| 17 | electromotor | | | |
| 18 | output shaft | | | |

**Claims**

1.  Drive arrangement (1) for a motor vehicle comprising
    an internal combustion engine (2) with at least one output shaft (3) providing a rotary motion (M),
    at least one wheel, in particular at least two wheels (4, 5), which is/are driven by said internal combustion engine (2), wherein said wheel or each of said wheels (4, 5) comprises a drive shaft (6, 7) to which said rotary motion (M) is provided in order to drive the respective wheel (4, 5),
    **characterized in that**
    the drive arrangement (1) comprises further at least one electromechanical machine (8, 9) which is arranged between said output shaft (3) and at least one of said drive shafts (6, 7), such that with the electromechanical machine (8, 9) the respective drive shaft (6, 7) is engageable and dis-engageable to said output shaft (3), wherein the rotary motion (M) provided by the output shaft (3) is directly or indirectly inputted in said electromechanical machine (8, 9) and is outputted by said electromechanical machine (8, 9) directly or indirectly to said drive shaft (6, 7) when the electromechanical machine engages the output shaft (3) and the drive shaft (6, 7).

2.  Drive arrangement (1) according to claim 1, wherein said electromechanical machine (8, 9) acts as a differential gear between at least two wheels (4, 5).

3.  Drive arrangement (1) according to one of the preceding claims, **characterized in that** the electromechanical machine (8, 9) comprises a stator (11) and a rotor (12), wherein the stator (11) is mounted in a mechanical connection with the output shaft (3) and the rotor (12) is mounted in a mechanical connection with the drive shaft (6, 7); or wherein the stator (11) is mounted in a mechanical connection with the drive shaft (6, 7) and the rotor (12) is mounted in a mechanical connection with the output shaft (3).

4.  Drive arrangement (1) according to one of the preceding claims, **characterized in that** the drive arrangement (1) further comprises a control unit and an electrical power source, wherein with said control unit and said electrical power source, the angular velocity of the stator and rotor of the electromechanical machine and/or the torque transmitted between the input provided by said output shaft (3) and the output provided by the electromechanical machine (8, 9) on said drive shaft (6, 7) and/or the power delivered to the respective drive shaft is adjustable.

5. Drive arrangement (1) according to one of the preceding claims, **characterized in that** a first of said electromechanical machines (8) is arranged in connection with a first of said drive shafts (6) and a second of said electromechanical machines (9) is arranged in connection with a second of said drive shafts (7).

6. Drive arrangement (1) according to one of the preceding claims, wherein the output shaft (3) is in rotary connection with a gear (10) which gear acts on said electromechanical machine (8, 9).

7. Drive arrangement (1) according to one of the preceding claims, wherein the output shaft (3) is in rotary connection with a gear (10), in particular a bevel gear, having a first output shaft (20) and a second output shaft (21), wherein between the first output shaft (20) of the gear (10) and the drive shaft (6) of a first wheel (4) one of said electromechanical machines (8) is arranged and the second output shaft (21) of the gear (10) is directly linked to the drive shaft (7) of the second wheel (5).

8. Drive arrangement (1) according to one of the claims 1 to 6, wherein the output shaft (3) is in rotary connection with a gear (10), in particular a bevel gear, having a first output shaft (20) and a second output shaft (21), wherein between the first output shaft (20) of the gear (10) and the drive shaft (6) of a first wheel (4) one of said electromechanical machines (8) is arranged and between the second output shaft (21) of the gear (10) and the drive shaft (7) of a second wheel (5) a further of said electromechanical machines (9) is arranged.

9. Drive arrangement (1) according to one of the preceding claims, **characterized in that** the internal combustion engine comprises a first output shaft (24) and a second output shaft (25),
wherein said first output shaft is in rotary connection with the first electromechanical machine and
wherein said second output shaft is in rotary connection with the second electromechanical machine.

10. Drive arrangement (1) according to one of the preceding claims, wherein the drive arrangement (1) comprises additionally two further wheels (13, 14) wherein each of said wheels comprises a shaft (15, 16).

11. Drive arrangement (1) according to claim 10,
wherein each of said shafts (15, 16) is a drive shaft that is in connection with an electromechanical machine; or
wherein said two further wheels (13, 14) are driven by an electromotor (17) which has an output shaft (18) acting on a differential gear (19) to which said two wheels (13, 14) are connected via said shaft (15, 16); or
wherein each of said shafts is a non-driven shaft.

12. Drive arrangement (1) according to one of the preceding claims, **characterized in that** in case the electromechanical machine (8, 9) acts as a generator the generated electrical energy is recuperated in said electrical power source; and/or **in that** in case a plurality of electromechanical machines are arranged and at least one of said electromechanical machines (8, 9) acts as a generator the generated electrical energy is recuperated to one or more of the other electromechanical machines (9, 8).

13. Drive arrangement (1) according to one of the preceding claims, wherein between the internal combustion engine and the wheel or the gear a transmission gear and/or a clutch is arranged.

14. Drive arrangement (1) according to claim 13, **characterized in that** wherein said clutch (23) is an automatic clutch; or wherein said clutch is manual clutch.

15. Drive arrangement (1) according to one of the preceding claims, wherein between at last one wheel and at least one electromechanical machine a transmission gear (28) is arranged.

16. Vehicle, in particular an automobile or a truck, comprising a drive arrangement according to one of the preceding claims.

1

23

A

5

7

21

M

10

20

12

11

2

3

8

6

A,B 4

**FIG. 1**

1

A,B

5

9

7

12

11

21

M

10

20

12

11

6

2

3

8

A,B 4

**FIG. 2**

FIG. 3

FIG. 4

**FIG. 5**

**FIG. 6**

FIG. 7

Europäisches
Patentamt

European
Patent Office

Office européen
des brevets

# EUROPEAN SEARCH REPORT

Application Number

EP 15 16 1976

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 384 521 A (COE CARLOS J [US]) 24 January 1995 (1995-01-24) <br><br> * figures 3,4,5 * <br> ----- | 1,2,4-6, 8,10,11, 16 | INV. B60K6/48 B60K7/00 B60K17/02 B60K6/26 |
| X | DE 10 2010 016844 A1 (IPETRONIK GMBH & CO KG [DE]) 10 November 2011 (2011-11-10) * paragraph [0047]; figures 1,2,3,6,7 * <br> ----- | 1,3-8, 12-16 | |
| X | DE 196 24 247 A1 (BORN RAINER [DE]) 2 January 1998 (1998-01-02) * the whole document * <br> ----- | 1,2,4,5, 9-11,16 | |
| X | US 5 909 094 A (YAMADA EIJI [JP] ET AL) 1 June 1999 (1999-06-01) * column 1, line 59 - column 2, line 31; figure 3 * <br> ----- | 1,3,4, 12,16 | |
| A | EP 1 642 759 A1 (TAI-HER YANG [TW]) 5 April 2006 (2006-04-05) * the whole document * <br> ----- | 1 | |

TECHNICAL FIELDS
SEARCHED (IPC)

B60K

The present search report has been drawn up for all claims

| Place of search | Date of completion of the search | Examiner |
|---|---|---|
| Munich | 29 September 2015 | Granier, Frédéric |

EPO FORM 1503 03.82 (P04C01)

## ANNEX TO THE EUROPEAN SEARCH REPORT
## ON EUROPEAN PATENT APPLICATION NO.

EP 15 16 1976

This annex lists the patent family members relating to the patent documents cited in  the above-mentioned European search report.
The members are as contained in the European Patent Office EDP file on
The European Patent Office is in no way liable for these particulars which are merely given for the purpose of information.

29-09-2015

| Patent document cited in search report | | Publication date | Patent family member(s) | | Publication date |
|---|---|---|---|---|---|
| US 5384521 | A | 24-01-1995 | NONE | | |
| DE 102010016844 | A1 | 10-11-2011 | DE 102010016844<br>WO  2011138181 | A1<br>A1 | 10-11-2011<br>10-11-2011 |
| DE 19624247 | A1 | 02-01-1998 | NONE | | |
| US 5909094 | A | 01-06-1999 | JP  3052803<br>JP  H0946967<br>US  5909094 | B2<br>A<br>A | 19-06-2000<br>14-02-1997<br>01-06-1999 |
| EP 1642759 | A1 | 05-04-2006 | AT   472433<br>EP  1642759<br>EP  2196345 | T<br>A1<br>A1 | 15-07-2010<br>05-04-2006<br>16-06-2010 |

EPO FORM P0459

For more details about this annex : see Official Journal of the European Patent Office, No. 12/82